Europäisches Patentamt

European Patent Office

Office européen des brevets

(19)

(11) Veröffentlichungsnummer: **0 365 475**
**A2**

(12) ## EUROPÄISCHE PATENTANMELDUNG

(21) Anmeldenummer: **89810762.8**

(22) Anmeldetag: **09.10.89**

(51) Int. Cl.⁵: **F16B 13/06**

(30) Priorität: **15.10.88 DE 3835243**

(43) Veröffentlichungstag der Anmeldung:
**25.04.90 Patentblatt 90/17**

(84) Benannte Vertragsstaaten:
**AT BE CH DE ES FR GB IT LI NL SE**

(71) Anmelder: **HILTI Aktiengesellschaft**

**FL-9494 Schaan(LI)**

(72) Erfinder: **Mark, Fritz**
**Rheinstrasse 27b**
**A-6841 Mäder(AT)**

(74) Vertreter: **Wildi, Roland**
**Hilti Aktiengesellschaft Patentabteilung**
**FL-9494 Schaan(LI)**

(54) **Spreizanker.**

(57) Der Spreizanker weist eine Spreizhülse (1) und eine Ankerstange (2) auf. Schalenförmige Spreizsegmente (11) der Spreizhülse (1) sind durch Einziehen eines Spreizkegels (13) der Ankerstange (2) zwischen die Spreizsegmente (11) radial auslenkbar. Die Biegestelle für das Auslenken der Spreizsegmente (11) ist durch eine Querschnittsschwächung (9) der Spreizhülse (1) gebildet, die zwischen innen- und aussenseitigen Ausnehmungen (7, 8) liegt. Die Ausnehmungen (7, 8) weisen einen tangential und geradlinig verlaufenden Grund (7a, 8a) auf, der in einer Normalebene zur Hülsenachse liegt.

Fig. 1

EP 0 365 475 A2

## Spreizanker

Die Erfindung betrifft einen Spreizanker zum Befestigen in Bohrlöchern, mit einer Spreizhülse und einer Ankerstange, wobei die Spreizhülse setzrichtungsseitig von Längsschlitzen begrenzte, schalenförmige Spreizsegmente aufweist, die durch Einziehen eines Spreizkegels in die Spreizhülse unter Biegen um eine als Biegestelle wirkende, zwischen innen- und aussenseitigen Ausnehmungen liegende Querschnittsschwächung radial auslenkbar sind.

Aus der DE-OS 31 37 226 ist ein Spreizanker bekannt, der in Bohrlöchern mit kegeliger Erweiterung befestigt wird. Der Spreizanker weist eine Spreizhülse mit schalenförmigen Spreizsegmenten und eine Ankerstange mit Spreizkegel auf. Die Spreizsegmente werden durch Einziehen des Spreizkegels zum formschlüssigen Eingriff in die kegelige Erweiterung der Bohrlöcher radial ausgelenkt. Dabei werden die Spreizsegmente um eine diese mit dem angrenzenden Teil der Spreizhülse verbindende Querschnittsschwächung gebogen.

Die zur Bildung der Querschnittsschwächung vorgesehenen innen- und aussenseitigen Ausnehmungen sind als in Umfangsrichtung der Spreizsegmente verlaufende Nuten ausgebildet. Dadurch weist die Querschnittsschwächung in der Axialprojektion einen kreisringbogenförmigen Querschnitt auf. Diese Querschnittsform zeichnet sich nach den Erkenntnissen der Festigkeitslehre durch ein hohes Widerstandsmoment aus. Für den Biegevorgang sind folglich .hohe Kräfte erforderlich, welche als Radialkräfte in die an die kegelige Erweiterung entgegen der Setzrichtung angrenzende Zone der Wandung des Bohrloches eingeleitet werden. Dies kann zur Beschädigung dieser Zone führen, was die Verankerung des Spreizankers beeinträchtigt.

Der Erfindung liegt die Aufgabe zugrunde, einen Spreizanker zu schaffen, bei dem für das Auslenken der Spreizsegmente nur geringe, keine Beschädigung des Bohrloches hervorrufende Kräfte erforderlich sind.

Erfindungsgemäss wird die Aufgabe dadurch gelöst, dass die Ausnehmungen einen geradlinig, tangential zur Spreizhülse in einer Normalebene zur Hülsenachse verlaufenden Grund aufweisen.

Die erfindungsgemässe Ausbildung der Ausnehmungen führt zu einer als Biegestelle dienenden Querschnittsschwächung, die im wesentlichen Rechteck- oder Trapez-Form aufweist. Die kleinere Höhe des Rechteckes oder des Trapezes ist dabei radial zur Spreizhülsenachse angeordnet, so dass eine erhebliche Reduzierung des zum radialen Auslenken der Spreizsegmente zu überwindenden Widerstandsmomentes eintritt. Beim Biegevorgang, während des Auslenkens der Spreizsegmente, wir

ken folglich nur vernachlässigbar kleine Radialkräfte auf die Wandung des Bohrloches ein. Auch bei einem allfälligen späteren Entfernen des Spreizankers durch Ausziehen aus dem Bohrloch wirkt beim Zurückbiegen der Spreizsegmente nur ein entsprechend kleines Widerstandsmoment.

Zweckmässig endet der Grund der Ausnehmungen in seiner Längserstreckung innerhalb der bogenförmigen Innen- bzw Aussenkontur der Spreizsegmente.

Vorzugsweise bildet der Grund den Boden einer V-förmigen Ausnehmung. Diese Ausbildung ist beispielsweise für die innenseitig angeordnete Ausnehmung vorteilhaft.

Zweckmässigerweise bildet der Grund den Boden einer U-förmigen Ausnehmung. Die lichte Weite der U-förmigen Ausnehmung erlaubt bei aussenseitiger Anordnung ein starkes Auslenken der Spreizsegmente, ohne dass die Flanken der Ausnehmung aneinander auflaufen und das Auslenken behindern, was insbesondere beim Einsatz in Bohrlöchern, deren kegelige Erweiterung einen grossen Kegelwinkel aufweist, vorteilhaft ist.

Der zwischen den Ausnehmungen verbleibende Restquerschnitt weist vorzugsweise eine in Radialrichtung gemessene Breite auf, die dem 0,3- bis 0,5- fachen der Wandungsstärke der Spreizsegmente entspricht. Dadurch wird eine kleine, das beim Auslenken der Spreizsegmente in Betracht kommende Widerstandsmomment senkende Querschnittsfläche geschaffen, die zudem ausreichende Bruchfestigkeit aufweist.

Die Erfindung wird nachstehend anhand von Zeichnungen, die ein Ausführungsbeispiel wiedergeben, näher erläutert. Es zeigen:

Fig. 1 einen Spreizanker in Ausgangsstellung, im Langsschnitt;

Fig. 2 einen vergrösserten Schnitt durch den Spreizanker nach Fig. 1, gemäss Schnittverlauf II-II;

Fig. 3 den Spreizanker nach Fig. 1 im Verwendungseinsatz.

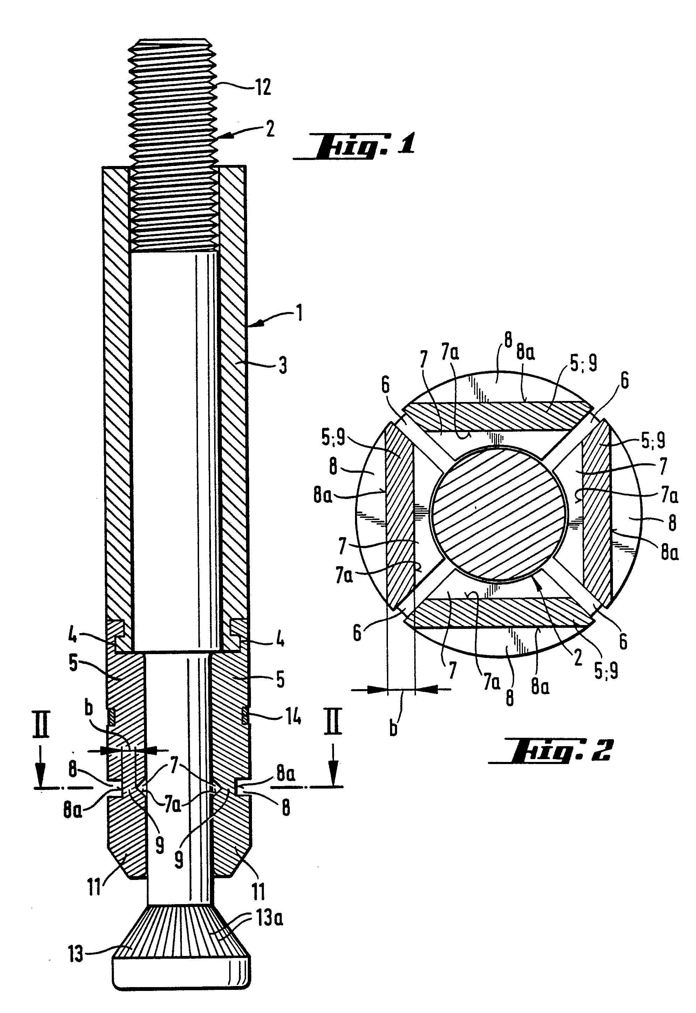

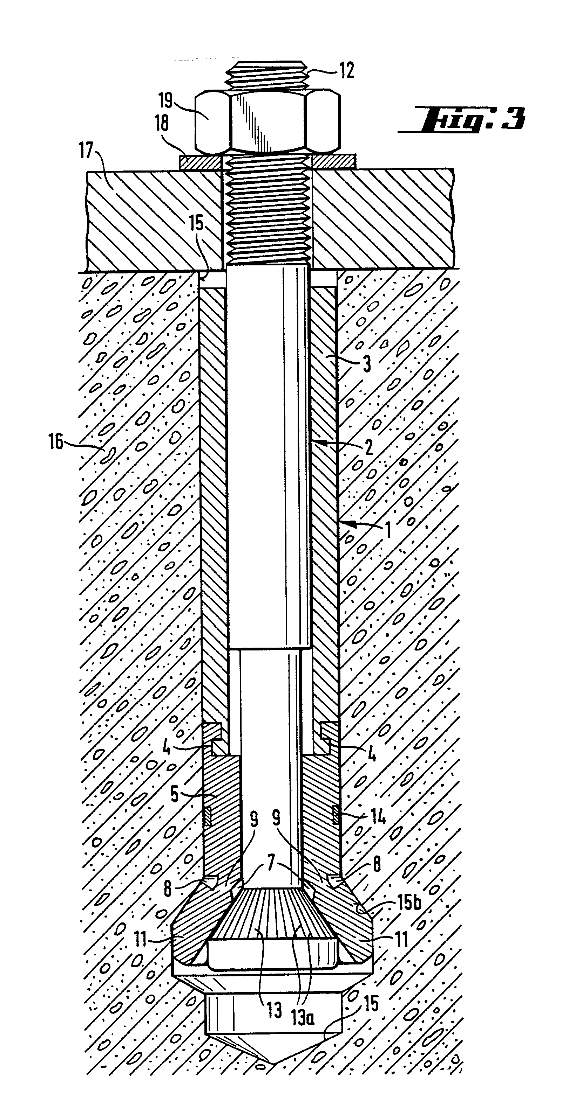

Der in Fig. 1 dargestellte Spreizanker weist eine Spreizhülse 1 und eine Ankerstange 2 auf. Die Spreizhülse 1 besteht aus einem rohrförmigen Halsteil 3, an dem durch eine Klauenverbindung 4 vier Schalenkörper 5 axial festgelegt sind. Die Schalenkörper 5 sind in Umfangsrichtung durch Längsschlitze 6 voneinander getrennt, wie dies die Fig. 2 verdeutlicht. Im setzrichtungsseitigen Bereich der Schalenkörper 5 weisen diese innenseitig eine V-förmige Ausnehmung 7 und auf gleicher axialer Höhe aussenseitig eine U-förmige Ausnehmung 8 auf. Die Ausnehmungen 7, 8 verlaufen tangential zur Spreizhülse 1, wobei deren Grund 7a bzw. 8a geradlinig ausgebildet ist und in einer Normalebene zur Hülsenachse liegt. Die zwischen der innen- und aussenseitigen Ausnehmung 7 und 8 jedes Schalenkörpers 5 liegende Querschnittsschwächung 9 dient als Biegestelle für an diese in Setzrichtung anschliessende schalenförmige Spreizsegmente 11. Die Querschnittsschwächung 9 weist eine in Radialrichtung gemessene Breite b auf, die dem 0,3- bis 0,5-fachen der Wandungsstärke der Spreizsegmente 11 entspricht. Die Schalenkörper 5 können durch bekannte Mittel, wie beispielsweise Federringe 14, radial auf dem Halsteil 3 zusammengehalten werden.

Die Ankerstange 2 weist in dem der Setzrichtung abgewandten Abschnitt ein Aussengewinde 12 für den Lastangriff auf. Sie durchragt die Spreizhülse 1 und trägt im setzrichtungsseitigen, die Spreizhülse 1 axial überragenden Endbereich einen angeformten Spreizkegel 13. Dieser zwischen die Spreizsegmente 11 einziehbare Spreizkegel 13 ist an der Kegelfläche mit einer Längskerbung 13a versehen.

Bei Verwendung wird der Spreizanker in der Ausgangsstellung gemäss Fig. 1 in ein Bohrloch 15, entsprechend Fig. 3, eingeführt. Das Bohrloch 15 weist nahe dem Bohrungsgrund 15a eine sich zum Bohrungsgrund 15a hin kegelig öffnende Erweiterung 15b auf und ist beispielsweise in ein Bauteil 16 aus Beton eingebracht, an dem ein Anschlussteil 17 befestigt werden soll.

Zum Befestigen des Spreizankers in dem Bohrloch 15 wird die Ankerstange 2 gegenüber der Spreizhülse 1 entgegen der Setzrichtung verschoben. Der Spreizkegel 13 gelangt dadurch zwischen die sich im Bereich der Erweiterung 15b befindlichen Spreizsegmente 11 und lenkt diese radial aus. Die Spreizsegmente 11 legen sich formschlüssig in die Erweiterung 15b ein. Der Spreizkegel 13 verhindert ein Zurückschwenken der Spreizsegmente 11 in die Ausgangsstellung.

Für das Befestigen des Anschlussteiles 17 mittels einer Unterlegscheibe 18 und einer Mutter 19 ist ein Mitdrehen der Ankerstange 2 zu unterbinden. Diesem Zwecke dient die Längskerbung 13a am Spreizkegel 13, welche sich drehschlüssig in die Innenkontur der Spreizsegmente 11 eingräbt.

## Ansprüche

1. Spreizanker zum Befestigen in Bohrlöchern (15), mit einer Spreizhülse (1) und einer Ankerstange (2), wobei die Spreizhülse (1) setzrichtungsseitig von Längsschlitzen (6) begrenzte, schalenförmige Spreizsegmente (11) aufweist, die durch Einziehen eines Spreizkegels (13) in die Spreizhülse (1) unter Biegen um eine als Biegestelle wirkende, zwischen innen- und aussenseitigen Ausnehmungen (7, 8) liegende Querschnittsschwächung (9) radial auslenkbar sind, **dadurch gekennzeichnet,** dass die Ausnehmungen (7, 8) einen geradlinig, tangential zur Spreizhülse (1) in einer Normalebene zur Hülsenachse verlaufenden Grund (7a, 8a) aufweisen.

2. Spreizanker nach Anspruch 1, dadurch gekennzeichnet, dass der Grund (7a) den Boden einer V-förmigen Ausnehmung (7) bildet.

3. Spreizanker nach Anspruch 1, dadurch gekennzeichnet, dass der Grund (8a) den Boden einer U-förmigen Ausnehmung (8) bildet.

4. Spreizanker nach einem der Ansprüche 1 bis 3, dadurch gekennzeichnet, dass der zwischen den Ausnehmungen (7, 8) verbleibende Restquerschnitt eine in Radialrichtung gemessene Breite (b) aufweist, die dem 0,3- bis 0,5-fachen der Wandungsstärke der Spreizsegmente (11) entspricht.

_Fig. 1_

_Fig. 2_

**Fig: 3**